# EUROPÄISCHE PATENTSCHRIFT

(11) **EP 2 665 161 B1**
(45) Veröffentlichungstag und Bekanntmachung des Hinweises auf die Patenterteilung: **28.09.2016**
(21) Anmeldenummer: 12167882.5
(22) Anmeldetag: 14.05.2012
(51) Int. Cl.: H02K 11/33

(54) **Elektrische Maschine mit Drosseln am Statorumfang**
Electric machine with chokes on the stator periphery
Machine électrique à bobines autour du stator

(43) Veröffentlichungstag der Anmeldung: 20.11.2013
(73) Patentinhaber: Siemens Aktiengesellschaft, 80333 München (DE)
(72) Erfinder: Zatocil, Heiko, Dr., 90429 Nürnberg (DE)

(56) Entgegenhaltungen:
- WO-A1-99/62165
- DE-A1- 19 652 186
- DE-T5-112007 000 227

## Beschreibung

Die vorliegende Erfindung betrifft eine elektrische Maschine,
- wobei die elektrische Maschine einen Stator und einen Rotor aufweist,
- wobei der Rotor um eine Rotationsachse rotierbar ist und der Stator um die Rotationsachse herum angeordnet ist,
- wobei eine elektromotorische Kraft zwischen dem Stator und dem Rotor mit einem magnetischen Basisfluss korrespondiert,
- wobei der magnetische Basisfluss im Stator radial-tangential zur Rotationsachse orientiert ist,
- wobei am Stator an der vom Rotor abgewandten Seite mehrere Drosseln angeordnet sind, die tangential zur Rotationsachse gesehen verteilt angeordnet sind,
- wobei die Drosseln bei Beaufschlagung mit einem jeweiligen Drosselstrom im Stator einen jeweiligen magnetischen Zusatzfluss hervorrufen und
- wobei der jeweilige magnetische Zusatzfluss in einem an die jeweilige Drossel angrenzenden Bereich des Stators radial-axial zur Rotationsachse orientiert ist, so dass die elektromotorische Kraft zwischen dem Stator und dem Rotor durch den magnetischen Zusatzfluss nicht beeinflusst wird.

Eine derartige elektrische Maschine ist aus der DE 11 2007 000 227 T5 bekannt.

Aus der WO 99/62165 A1 ist eine elektrische Maschine bekannt, die einen Stator und einen Rotor aufweist, wobei der Rotor um eine Rotationsachse rotierbar ist und der Stator um die Rotationsachse herum angeordnet ist. Eine elektromotorische Kraft zwischen dem Stator und dem Rotor korrespondiert mit einem magnetischen Basisfluss. Der magnetische Basisfluss ist im Stator radial-tangential zur Rotationsachse orientiert. Am Stator sind an der vom Rotor abgewandten Seite mehrere Drosseln angeordnet, die tangential zur Rotationsachse gesehen verteilt angeordnet sind. Die Drosseln rufen bei Beaufschlagung mit einem jeweiligen Drosselstrom im Stator einen jeweiligen magnetischen Zusatzfluss hervor. Der DE 196 52 186 A1 ist ein im wesentlichen gleichgelagerter Offenbarungsgehalt zu entnehmen.

In vielen elektrischen Anwendungen werden Drosseln benötigt. Ein Beispiel sind sogenannte DC-DC-Steller, die eine Eingangsgleichspannung auf eine Ausgangsgleichspannung umsetzen. Auch derartige DC-DC-Steller sind allgemein bekannt.

Im Stand der Technik sind die Drosseln meist eigenständige Elemente des elektrischen Systems, die separat in das elektrische System eingefügt werden. Sie benötigen Bauraum und beeinflussen die Systemkosten negativ.

In vielen elektrischen Anwendungen sind weiterhin elektrische Antriebe vorhanden. In derartigen Anwendungen existiert demzufolge mindestens eine elektrische Maschine. Es existiert eine Vielzahl von verschiedenen Bauformen elektrischer Maschinen. Die weitaus meisten elektrischen Maschinen sind jedoch so aufgebaut, wie dies obenstehend einleitend ausgeführt ist.

Bei den im oben genannten Stand der Technik beschriebenen elektrischen Maschinen sind die Drosseln in den Stator integriert. Sie sind also Bestandteil des Stators.

Die vorliegende Erfindung ist auf elektrische Anwendungen gerichtet, in denen zum einen eine elektrische Maschine der obenstehend beschriebenen Art vorhanden ist und zum anderen Drosseln benötigt werden.

Die Aufgabe der vorliegenden Erfindung besteht darin, bei einem derartigen System die Drosseln auf besonders einfache, zuverlässige und kostengünstige Weise zur Verfügung stellen zu können.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 9.

Erfindungsgemäß ist vorgesehen, eine elektrische Maschine der eingangs genannten Art dadurch auszugestalten, dass die Drosseln auf einem jeweiligen U-förmigen Joch angeordnet sind, dass die U-förmigen Joche jeweils zwei Schenkel und eine die beiden jeweiligen Schenkel verbindende Basis aufweisen und dass die Schenkel des jeweiligen Jochs bezüglich der Rotationsachse in axial voneinander beabstandeten Bereichen bei der gleichen Tangentialposition an den Stator angrenzen.

In einer weiter bevorzugten Ausgestaltung der vorliegenden Erfindung ist vorgesehen, dass die Anzahl an Drosseln ein ganzzahliges Vielfaches von zwei ist und dass die Drosseln tangential zur Rotationsachse gesehen gleichmäßig verteilt angeordnet sind, so dass die Drosseln einander bezüglich der Rotationsachse paarweise gegenüber liegen. Minimal sind in der Regel vier Drosseln vorhanden. In der Regel sind sechs oder mehr Drosseln vorhanden. Allgemein sind vorzugsweise 2n oder 3n Drosseln vorhanden, wobei n die Polzahl der elektrischen Maschine ist. Prinzipiell sind aber auch andere Anzahlen an Drosseln möglich.

Die einander bezüglich der Rotationsachse gegenüberliegenden Drosseln können parallel oder in Serie geschaltet sein. Diese Ausgestaltung reduziert den Verdrahtungsaufwand und minimiert die Anzahl der zum Betrieb der Drosseln erforderlichen Schalter. Auch eine Schaltung unabhängig voneinander ist jedoch möglich.

Die Stärke des magnetischen Basisflusses variiert im Stator an der vom Rotor abgewandten Seite in Abhängigkeit von einem Betriebszustand der elektrischen Maschine zeitlich und tangential zur Rotationsachse gesehen örtlich. Eine optimale Nutzung kann dadurch erreicht werden,
- dass der Betriebszustand der elektrischen Maschine einer Steuereinrichtung für die Drosseln zugeführt wird und
- dass die Steuereinrichtung eine die Beaufschlagung der Drosseln mit dem jeweiligen Drosselstrom beeinflussende Schalteinrichtung in Abhängigkeit vom Betriebszustand der elektrischen Maschine derart steuert, dass die in den Drosseln fließenden Drosselströme jeweils gegenläufig zu der Stärke des magnetischen Basisflusses in demjenigen Bereich des Stators, in dem der von der jeweiligen Drossel hervorgerufene jeweiligen magnetische Zusatzfluss radial-axial zur Rotationsachse orientiert ist, variiert wird.

Der Betriebszustand der elektrischen Maschine umfasst eine Auslastung der elektrischen Maschine und eine Orientierung des magnetischen Basisflusses. Es ist möglich, dass die Steuereinrichtung unter Berücksichtigung ausschließlich der Auslastung der elektrischen Maschine oder ausschließlich der Orientierung des magnetischen Basisflusses maximal zulässige Werte für die Drosselströme ermittelt und die Schalteinrichtung derart steuert, dass die in den Drosseln fließenden Drosselströme den jeweils maximal zulässigen Wert zu keinem Zeitpunkt übersteigen. Vorzugsweise jedoch ermittelt die Steuereinrichtung die maximal zulässigen Werte für die Drosselströme und unter Berücksichtigung sowohl der Auslastung der elektrischen Maschine als auch der Orientierung des magnetischen Basisflusses.

Zumindest einige der Drosseln können Bestandteil mindestens eines DC-DC-Stellers sein. Ebenso können zumindest einige der Drosseln Bestandteil einer Stromversorgungseinrichtung der elektrischen Maschine sein. Weiterhin kann die elektrische Maschine als Hauptantrieb eines Kraftfahrzeugs ausgebildet sein. Die genannten Eigenschaften können alternativ realisiert sein. Vorzugsweise sind sie in Kombination realisiert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Querschnitt durch die elektrische Maschine von FIG 1,
- FIG 3 und 4: mögliche Verschaltungen von Drosseln,
- FIG 5: eine elektrische Anordnung,
- FIG 6: ein Zeitdiagramm,
- FIG 7: ein Fahrzeug und
- FIG 8: einen Querschnitt durch eine weitere elektrische Maschine.

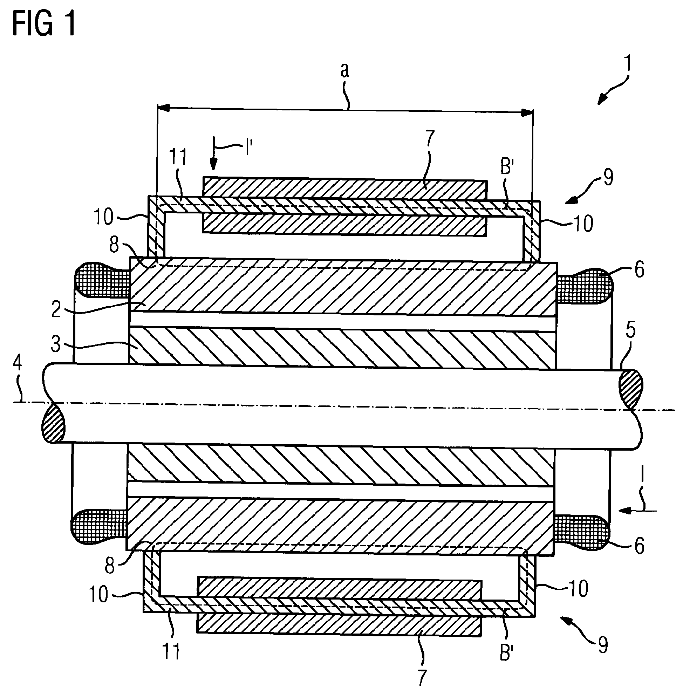

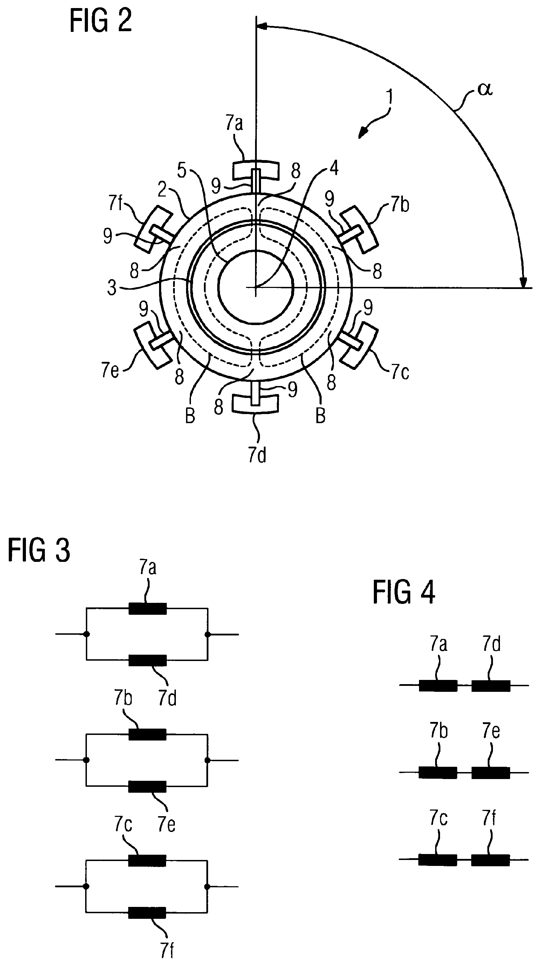

Gemäß den FIG 1 und 2 weist eine elektrische Maschine 1 einen Stator 2 und einen Rotor 3 auf. Der Rotor 3 ist um eine Rotationsachse 4 rotierbar. Er ist zu diesem Zweck auf einer Rotorwelle 5 angeordnet. Der Stator 2 ist um die Rotationsachse 4 herum angeordnet. In der Regel ist der Rotor 3 entsprechend der Darstellung der FIG 1 und 2 radial innerhalb des Stators 2 angeordnet. In Einzelfällen kann es jedoch umgekehrt sein.

Die Rotationsachse 4 definiert ein zylindersymmetrisches System. Die Begriffe axial, radial und tangential sind daher auf die Rotationsachse 4 bezogen. "Axial" bedeutet eine Richtung parallel zur Rotationsachse 4. "Radial" bedeutet eine Richtung orthogonal zur Rotationsachse 4 auf die Rotationsachse 4 zu oder von ihr weg. "Tangential" bedeutet eine Richtung, die sowohl zur Axialrichtung als auch zur Radialrichtung orthogonal ist. "Tangential" ist also eine Richtung bei konstanter Axialposition und in konstantem radialem Abstand von der Rotationsachse 4 kreisförmig um die Rotationsachse 4 herum.

Im Stator 2 ist ein Statorwicklungssystem 6 angeordnet. Das Statorwicklungssystem 6 wird mit einem Wicklungsstrom I beaufschlagt. Der Stator 2 übt dadurch auf den Rotor 3 eine elektromotorische Kraft (EMK) aus. Die elektromotorische Kraft korrespondiert mit einem magnetischen Basisfluss B, der im Stator 2 und auch im Rotor 3 herrscht. Der magnetische Basisfluss B ist gemäß der Darstellung in FIG 2 im Stator 2 radial-tangential orientiert. In Axialrichtung sind keine oder nur sehr geringe Flusskomponenten vorhanden.

Am Stator 2 sind an der vom Rotor 3 abgewandten Seite - gemäß den FIG 1 und 2 also radial außen - mehrere Drosseln 7 angeordnet. Die Drosseln 7 sind in FIG 2 zusätzlich mit einem Kleinbuchstaben (a - f) versehen. Soweit nachfolgend allgemeine Aussagen zu den Drosseln 7 getroffen werden, wird nachfolgend stets nur das Bezugszeichen 7 verwendet. Soweit zwischen den einzelnen Drosseln 7 unterschieden wird, wird zusätzlich der entsprechende Kleinbuchstabe mit verwendet, die entsprechende Drossel also beispielsweise als Drossel 7a, 7b usw. bezeichnet.

Die Drosseln 7 sind gemäß FIG 2 tangential zur Rotationsachse 4 gesehen verteilt angeordnet. Insbesondere sind die Drosseln 7 gemäß FIG 2 in der Regel tangential zur Rotationsachse 4 gleichmäßig verteilt angeordnet. Meist ist die Anzahl an Drosseln 7 gerade, also ein ganzzahliges Vielfaches von zwei. Aufgrund der gleichmäßigen Verteilung der Drosseln 7 liegen die Drosseln 7 daher einander bezüglich der Rotationsachse 4 paarweise gegenüber. Gemäß FIG 2 liegen sich also beispielsweise die Drosseln 7a und 7d gegenüber, ebenso die Drosseln 7b und 7e sowie die Drosseln 7c und 7f.

Die Drosseln 7 können - siehe FIG 1 - mit einem jeweiligen Drosselstrom I' beaufschlagt werden. In diesem Fall rufen die Drosseln 7 im Stator 2 einen jeweiligen magnetischen Fluss B' hervor, nachfolgend zur sprachlichen Unterscheidung von dem mit der elektromotorischen Kraft korrespondierenden magnetischen Basisfluss B als magnetischer Zusatzfluss B' bezeichnet. Der jeweilige magnetische Zusatzfluss B' ist - siehe FIG 1 - radial-axial zur Rotationsachse 4 orientiert. Dies gilt zumindest in einem jeweiligen Bereich 8 des Stators 2, der an die jeweilige Drossel 7 angrenzt. Diese Bereiche 8 werden nachfolgend zur sprachlichen Unterscheidung von anderen Bereichen als Drosselbereiche 8 bezeichnet.

Aufgrund des Umstands, dass der magnetische Zusatzfluss B' radial-axial zur Rotationsachse 4 orientiert ist, stört der magnetische Zusatzfluss B' den magnetischen Basisfluss B nicht oder zumindest nur in vernachlässigbarem Umfang. Die elektromotorische Kraft zwischen dem Stator 2 und dem Rotor 3 wird daher durch den magnetischen Zusatzfluss B' nicht (bzw. nur marginal) beeinflusst.

Die Drosseln 7 sind in der Regel gleich aufgebaut. Nachfolgend wird daher in Verbindung mit den FIG 1 und 2 - rein beispielhaft - stets nur auf eine der Drosseln 7, beispielsweise die Drossel 7a, Bezug genommen. Die entsprechenden Ausführungen gelten aber für alle Drosseln 7.

Die jeweilige Drossel 7 ist auf einem jeweiligen U-förmigen Joch 9 angeordnet. Das Joch 9 weist zwei Schenkel 10 und eine Basis 11 auf. Die Basis 11 verbindet die beiden Schenkel 10 miteinander. Die Schenkel 10 des Jochs 9 grenzen an den Stator 2 an, und zwar bezüglich der Rotationsachse 4 bei der gleichen Tangentialposition, aber in einem axialen Abstand a voneinander.

Der magnetische Basisfluss B weist in Tangentialrichtung der Rotationsachse 4 gesehen eine gewisse Regelmäßigkeit auf. Wenn der magnetische Basisfluss B zu einem bestimmten Zeitpunkt an einen bestimmten Ort des Stators 2 eine bestimmte Orientierung (beispielsweise nach radial außen mit einer Tangentialkomponente im Uhrzeigersinn) und eine bestimmte Stärke aufweist, so weist der magnetische Basisfluss B an der in Bezug auf die Rotationsachse 4 gegenüberliegenden Stelle die gleiche Stärke und die entgegengesetzte Orientierung (gemäß obigem Beispiel nach radial innen mit einer Tangentialkomponente entgegen dem Uhrzeigersinn) auf. Alternativ zu einer voneinander unabhängigen Schaltung der Drosseln 7 ist es daher ohne Weiteres möglich, die paarweise einander gegenüberliegenden Drosseln 7 gemäß FIG 3 parallel zu schalten oder gemäß FIG 4 in Serie zu schalten.

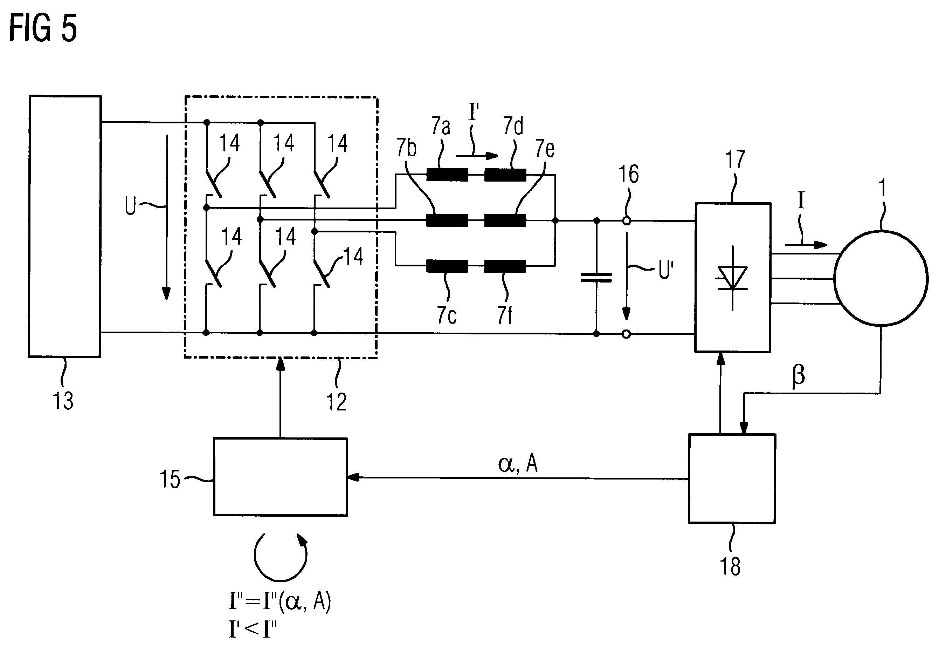

FIG 5 zeigt eine typische betriebstechnische Einbindung der Drosseln 7 (bzw. zumindest einiger der Drosseln 7) in den Betrieb der elektrischen Maschine. In FIG 5 sind die Drosseln 7 über eine Schalteinrichtung 12 mit einer Gleichspannungsquelle 13 verbunden. Die Schalteinrichtung 12 weist eine Anzahl an Schaltern 14 auf. Ein Ansteuerzustand der Schalteinrichtung 12 beeinflusst die Beaufschlagung der Drosseln 7 mit ihrem jeweiligen Drosselstrom I'.

Die Gleichspannungsquelle 13 liefert eine Eingangsspannung U. Die Schalteinrichtung 12 wird von einer Steuereinrichtung 15 gesteuert. Die Steuerung der Schalteinrichtung 12 durch die Steuereinrichtung 15 erfolgt in der Regel derart, dass an einem Ausgang 16 eine Ausgangsspannung U` zur Verfügung steht. Die Ausgangsspannung U' kann - innerhalb gewisser Grenzen - größer oder kleiner als die Eingangsspannung U sein. Insbesondere kann die Ausgangsspannung U' durch entsprechende Ansteuerung der Schalteinrichtung 12 - innerhalb gewisser Grenzen - unabhängig von der Eingangsspannung U auf einem konstanten Wert gehalten werden.

Sowohl die Eingangsspannung U als auch die Ausgangsspannung U' sind Gleichspannungen. Die Drosseln 7 sind daher Bestandteil (mindestens) eines DC-DC-Stellers. Der entsprechende Aufbau und der entsprechende Betrieb sind Fachleuten allgemein bekannt.

Gemäß FIG 2 ist tangential zur Rotationsachse 4 gesehen die Verteilung des magnetischen Basisflusses B im Stator 2 nicht homogen. Vielmehr existieren Bereiche, in denen der magnetische Basisfluss B eine niedrigere Stärke aufweist als in anderen Bereichen. Dies gilt ganz besonders an der vom Rotor 3 abgewandten Seite des Stators 2. Die Stärke des magnetischen Basisflusses variiert daher an der vom Rotor 3 abgewandten Seite des Stators 2 tangential zur Rotationsachse 4 gesehen örtlich. Die relative Verteilung des Basisflusses B kann durch einen Flusswinkel α beschrieben werden.

Die in FIG 2 gezeigte Darstellung ist weiterhin nicht statisch, sondern ändert sich - auch bei gleicher Auslastung der elektrischen Maschine 1 - mit dem Flusswinkel α. Da der Flusswinkel α eine sich zeitlich ändernde Größe ist, variiert die Stärke des magnetischen Basisflusses B an der vom Rotor 3 abgewandten Seite des Stators 2 somit auch zeitlich.

Die elektrische Maschine 1 weist zu jedem Zeitpunkt einen Betriebszustand auf. Der Betriebszustand ist im Wesentlichen durch den Flusswinkel α und eine Amplitude A sowie gegebenenfalls die zeitlichen Änderungen dieser beiden Größen α, A bestimmt. Der Flusswinkel α entspricht, wie erläutert, in Bezug auf die Rotationsachse 4 der Orientierung und Verteilung des magnetischen Basisflusses B. Die Amplitude A ist proportional zur Stärke des magnetischen Basisflusses B. Sie entspricht im Wesentlichen einer Auslastung der elektrischen Maschine. Die entsprechenden Größen α, A sind durch den Ansteuerzustand eines Umrichters 17 und die Drehstellung β des Rotors 3 bestimmt.

Die Ansteuerung des Umrichters 17 wird von einer Antriebssteuerung 18 vorgenommen. Der Antriebssteuerung 18 wird - direkt oder indirekt die Drehstellung β des Rotors 3 zugeführt. Die Antriebssteuerung 18 "kennt" daher den Betriebszustand der elektrischen Maschine 1, also den Flusswinkel α und die Amplitude A. Die Antriebssteuerung 18 ist daher in der Lage, die entsprechenden Größen α, A oder hiermit korrespondierende Größen und damit im Ergebnis den Betriebszustand der elektrischen Maschine 1 der Steuereinrichtung 15 des DC-DC-Stellers zuzuführen.

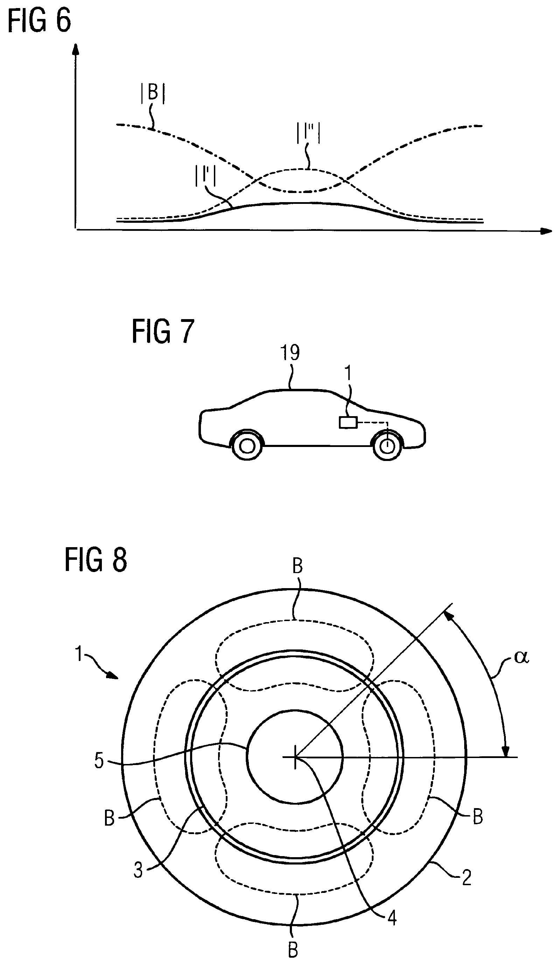

Die Steuereinrichtung 15 steuert die Schalteinrichtung 12 in Abhängigkeit vom Betriebszustand der elektrischen Maschine 1 derart an, dass - siehe FIG 6 - die in den Drosseln 7 fließenden Drosselströme I` und damit auch der magnetische Zusatzfluss B' gegenläufig zur Stärke des magnetischen Basisflusses B variiert wird. Der magnetische Basisfluss B ist hierbei auf den entsprechenden Drosselbereich 8 bezogen.

Es ist möglich, dass die Drosseln 7 und gegebenenfalls sogar der DC-DC-Steller nicht in den Betrieb der elektrischen Maschine 1 eingebunden sind. Oftmals wird die elektrische Maschine 1 jedoch über den DC-DC-Steller mit elektrischer Energie versorgt. In diesem Fall sind die Drosseln 7 (bzw. mindestens einige der Drosseln 7) nicht nur Bestandteil des DC-DC-Stellers, sondern zugleich auch Bestandteil einer Stromversorgungseinrichtung der elektrischen Maschine 1. Ein derartiger Fall kann insbesondere dann vorliegen, wenn die elektrische Maschine 1 entsprechend der Darstellung von FIG 7 als Hauptantrieb eines Kraftfahrzeugs 19 ausgebildet ist. Derartige Kraftfahrzeuge können - rein beispielhaft - Pkw oder Fahrräder mit elektrischem Hilfsantrieb sein. Im Falle der Verwendung der elektrischen Maschine 1 als Hauptantrieb eines Kraftfahrzeugs ist die Gleichspannungsquelle 13 im Wesentlichen mit der Batterie des Fahrzeugs identisch. Die elektrische Maschine 1 bewirkt den Vortrieb des Fahrzeugs, beispielsweise dadurch, dass sie auf ein Rad oder eine Achse des Fahrzeugs wirkt.

Wenn die Auslastung der elektrischen Maschine 1 hoch ist, kann der Stator 2 in denjenigen Bereichen, in denen die Stärke des magnetischen Basisflusses B am größten ist, in den Bereich der magnetischen Sättigung geraten. Vorzugsweise ermittelt die Steuereinrichtung 15 daher gemäß den FIG 5 und 6 unter Berücksichtigung sowohl der Auslastung der elektrischen Maschine 1 (also im Wesentlichen anhand der Amplitude A) als auch der Orientierung des magnetischen Basisflusses B (also im Wesentlichen des Flusswinkels α) für jede Drossel 7 einen zum jeweiligen Zeitpunkt maximal zulässigen Wert I" für den entsprechenden Drosselstrom I`. Die Steuereinrichtung 15 steuert die Schalteinrichtung 12 derart an, dass die in den Drosseln 7 tatsächlich fließenden Drosselströme I' den jeweiligen maximal zulässigen Wert I" zu keinem Zeitpunkt übersteigen. Der jeweilige - in der Regel zeitabhängige - maximal zulässige Wert I" stellt also eine Obergrenze für den zu dem jeweiligen Zeitpunkt in der entsprechenden Drossel 7 fließenden Drosselstrom I` dar.

Im Rahmen der vorliegenden Erfindung ist die elektrische Maschine 1 vorzugsweise als niederpolige elektrische Maschine ausgebildet. In der Regel ist sie entsprechend der Darstellung in FIG 2 als zweipolige elektrische Maschine ausgebildet. Alternativ kann sie entsprechend der Darstellung in FIG 8 als vierpolige elektrische Maschine ausgebildet sein. In manchen Fällen ist die vorliegende Erfindung auch bei höherpoligen elektrischen Maschinen noch anwendbar.

Die vorliegende Erfindung weist deutliche Vorteile gegenüber dem Stand der Technik auf. Insbesondere ergibt sich eine einfache, kompakte, kostengünstige und zuverlässig arbeitende elektrische Maschine 1.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den durch die Ansprüche definierten Schutzumfang der Erfindung zu verlassen.

## Patentansprüche

1. Elektrische Maschine,
- wobei die elektrische Maschine einen Stator (2) und einen Rotor (3) aufweist,
- wobei der Rotor (3) um eine Rotationsachse (4) rotierbar ist und der Stator (2) um die Rotationsachse (4) herum angeordnet ist,
- wobei eine elektromotorische Kraft zwischen dem Stator (2) und dem Rotor (3) mit einem magnetischen Basisfluss (B) korrespondiert,
- wobei der magnetische Basisfluss (B) im Stator (2) radial-tangential zur Rotationsachse (4) orientiert ist,
- wobei am Stator (2) an der vom Rotor (3) abgewandten Seite mehrere Drosseln (7) angeordnet sind, die tangential zur Rotationsachse (4) gesehen verteilt angeordnet sind,
- wobei die Drosseln (7) bei Beaufschlagung mit einem jeweiligen Drosselstrom (I') im Stator (2) einen jeweiligen magnetischen Zusatzfluss (B') hervorrufen,
- wobei der jeweilige magnetische Zusatzfluss (B') in einem an die jeweilige Drossel (7) angrenzenden Bereich (8) des Stators (2) radial-axial zur Rotationsachse (4) orientiert ist, so dass die elektromotorische Kraft zwischen dem Stator (2) und dem Rotor (3) durch den magnetischen Zusatzfluss (B') nicht beeinflusst wird,
**dadurch gekennzeichnet,**
**dass** die Drosseln (7) auf einem jeweiligen U-förmigen Joch (9) angeordnet sind, dass die U-förmigen Joche (9) jeweils zwei Schenkel (10) und eine die beiden jeweiligen Schenkel (10) verbindende Basis (11) aufweisen und dass die Schenkel (10) des jeweiligen Jochs (9) bezüglich der Rotationsachse (4) in axial voneinander beabstandeten Bereichen bei der gleichen Tangentialposition an den Stator (2) angrenzen.

2. Elektrische Maschine nach Anspruch 1, **dadurch gekennzeichnet, dass** die Anzahl an Drosseln (7) ein ganzzahliges Vielfaches von zwei ist und dass die Drosseln (7) tangential zur Rotationsachse (4) gesehen gleichmäßig verteilt angeordnet sind, so dass die Drosseln (7) einander bezüglich der Rotationsachse (4) paarweise gegenüber liegen.

3. Elektrische Maschine nach Anspruch 2, **dadurch gekennzeichnet, dass** die einander bezüglich der Rotationsachse (4) gegenüber liegenden Drosseln (7) parallel oder in Serie geschaltet sind.

4. Elektrische Maschine nach einem der obigen Ansprüche, **dadurch gekennzeichnet, dass** die elektrische Maschine als zweipolige elektrische Maschine oder als vierpolige elektrische Maschine ausgebildet ist.

5. Elektrische Maschine nach einem der obigen Ansprüche, **dadurch gekennzeichnet,**
- **dass** die Stärke des magnetischen Basisflusses (B) im Stator (2) an der vom Rotor abgewandten Seite in Abhängigkeit von einem Betriebszustand der elektrischen Maschine zeitlich und tangential zur Rotationsachse (4) gesehen örtlich variiert,
- **dass** der Betriebszustand der elektrischen Maschine einer Steuereinrichtung (15) für die Drosseln (7) zugeführt wird und
- **dass** die Steuereinrichtung (15) eine die Beaufschlagung der Drosseln (7) mit dem jeweiligen Drosselstrom (I') beeinflussende Schalteinrichtung (12) in Abhängigkeit vom Betriebszustand der elektrischen Maschine derart steuert, dass die in den Drosseln (7) fließenden Drosselströme (I') jeweils gegenläufig zu der Stärke des magnetischen Basisflusses (B) in demjenigen Bereich (8) des Stators (2), in dem der von der jeweiligen Drossel (7) hervorgerufene jeweiligen magnetische Zusatzfluss (B') radial-axial zur Rotationsachse (4) orientiert ist, variiert wird.

6. Elektrische Maschine nach Anspruch 5, **dadurch gekennzeichnet,**
- **dass** der Betriebszustand der elektrischen Maschine eine Auslastung der elektrischen Maschine und eine Orientierung des magnetischen Basisflusses (B) umfasst,
- **dass** die Steuereinrichtung (15) unter Berücksichtigung sowohl der Auslastung der elektrischen Maschine als auch der Orientierung des magnetischen Basisflusses (B) maximal zulässige Werte (I") für die Drosselströme (I') ermittelt und
- **dass** die Steuereinrichtung (15) die Schalteinrichtung (12) derart steuert, dass die in den Drosseln (7) fließenden Drosselströme (I') den jeweiligen maximal zulässigen Wert (I") zu keinem Zeitpunkt übersteigen.

7. Elektrische Maschine nach einem der obigen Ansprüche, **dadurch gekennzeichnet, dass** zumindest einige der Drosseln (7) Bestandteil mindestens eines DC-DC-Stellers sind.

8. Elektrische Maschine nach einem der obigen Ansprüche, **dadurch gekennzeichnet, dass** zumindest einige der Drosseln (7) Bestandteil einer Stromversorgungseinrichtung der elektrischen Maschine sind.

9. Elektrische Maschine nach einem der obigen Ansprüche, **dadurch gekennzeichnet, dass** die elektrische Maschine als Hauptantrieb eines Kraftfahrzeugs (19) ausgebildet ist.

## Claims

1. Electric machine,
- wherein the electric machine has a stator (2) and a rotor (3),
- wherein the rotor (3) can be rotated about an axis of rotation (4) and the stator (2) is arranged around the axis of rotation (4),
- wherein an electromotive force between the stator (2) and the rotor (3) corresponds with a magnetic base flow (B),
- wherein the magnetic base flow (B) in the stator (2) is oriented so as to be radial-tangential with regard to the axis of rotation (4),
- wherein on the stator (2), on the side facing away from the rotor (3), a plurality of chokes (7) are arranged which are arranged in a distributed manner when viewed tangentially to the axis of rotation (4),
- wherein the chokes (7), when a respective choke current (I') is applied to them in the stator (2), induce a respective magnetic additional flow (B'),
- wherein the respective magnetic additional flow (B') in a region (8) of the stator (2) bordering the respective choke (7) is oriented so as to be radial-axial with regard to the axis of rotation (4), so that the electromotive force between the stator (2) and the rotor (3) is not influenced by the magnetic additional flow (B'),
**characterised in that**
the chokes (7) are arranged on a respective U-shaped yoke (9), the U-shaped yokes (9) each have two limbs (10) and a base (11) connecting the two respective limbs (10) and the limbs (10) of the respective yoke (9), with respect to the axis of rotation (4), in regions at a distance from one another axially with the same tangential position, border the stator (2).

2. Electric machine according to claim 1, **characterised in that** the number of chokes (7) is an integral multiple of two and the chokes (7), when viewed tangentially with regard to the axis of rotation (4), are arranged so as to be equally distributed so that the chokes (7) oppose one another in pairs with respect to the axis of rotation (4).

3. Electric machine according to claim 2, **characterised in that** the chokes (7) opposing one another with respect to the axis of rotation (4) are switched in parallel or in series.

4. Electric machine according to one of the above claims, **characterised in that** the electric machine is embodied as a two-pole electric machine or as a four-pole electric machine.

5. Electric machine according to one of the above claims, **characterised in that**
- the strength of the magnetic base flow (B) in the stator (2) on the side facing away from the rotor varies as a function of an operating status of the electric machine in terms of time and, when viewed tangentially with regard to the axis of rotation (4), spatially,
- the operating status of the electric machine is fed to a control device (15) for the chokes (7) and
- the control device (15) controls a switching device (12) influencing the application of the respective choke current (I') to the chokes (7) as a function of the operating status of the electric machine, such that the choke currents (I') flowing into the chokes (7) are each varied contrary to the strength of the magnetic base flow (B) **in that** region (8) of the stator (2) in which the respective magnetic additional flow (B') induced by the respective choke (7) is oriented so as to be radial-axial to the axis of rotation (4).

6. Electric machine according to claim 5, **characterised in that**
- the operating status of the electric machine comprises a utilisation of the electric machine and an orientation of the magnetic base flow (B),
- the control device (15) determines maximally permissible values (I") for the choke currents (I') under consideration of both the utilisation of the electric machine and also the orientation of the magnetic base flow (B) and
- the control device (15) controls the switching device (12) such that the choke currents (I') flowing into the chokes (7) do not exceed the respective maximally permissible value (I") at any time.

7. Electric machine according to one of the above claims, **characterised in that** at least some of the chokes (7) are components of at least one DC-DC converter.

8. Electric machine according to one of the above claims, **characterised in that** at least some of the chokes (7) are components of a power supply unit of the electric machine.

9. Electric machine according to one of the above claims, **characterised in that** the electric machine is embodied as a main drive of a motor vehicle (19).

## Revendications

1. Machine électrique,
- dans laquelle la machine électrique a un stator ( 2 ) et un rotor ( 3 ),
- dans laquelle le rotor ( 3 ) peut tourner autour d'un axe ( 4 ) de rotation et le stator ( 2 ) est disposé autour de l'axe ( 4 ) de rotation,
- dans laquelle une force électromotrice entre le stator ( 2 ) et le rotor ( 3 ) correspond à un flux ( B ) magnétique de base,
- dans laquelle le flux ( B ) magnétique de base est orienté dans le stator ( 2 ) radialement-tangentiellement par rapport à l'axe ( 4 ) de rotation,
- dans laquelle, sur le stator ( 2 ) du côté éloigné du rotor ( 3 ), sont montées plusieurs bobines ( 7 ), qui sont réparties, considéré tangentiellement à l'axe ( 4 ) de rotation,
- dans laquelle les bobines ( 7 ) provoquent, lorsqu'elles sont alimentées par un courant ( I' ) de bobine respectif dans le stator ( 2 ), un flux ( B' ) magnétique supplémentaire,
- dans laquelle le flux ( B' ) magnétique supplémentaire respectif est orienté dans une partie ( 8 ), voisine de la bobine ( 7 ) respective, du stator ( 2 ) radialement-axialement par rapport à l'axe ( 4 ) de rotation, de manière à ne pas influencer la force électromotrice entre le stator ( 2 ) et le rotor ( 3 ) par le flux ( B' ) magnétique supplémentaire,
**caractérisée**
**en ce que** les bobines ( 7 ) sont disposées sur une culasse ( 9 ) respective en forme de U, en ce que les culasses ( 9 ) en forme de U ont respectivement deux branches ( 10 ) et une base ( 11 ) reliant les deux branches ( 10 ) respectives et en ce que les branches ( 10 ) de la culasse ( 9 ) respective sont, par rapport à l'axe ( 4 ) de rotation dans les parties voisines axialement l'une de l'autre, voisines du stator ( 2 ) en la même position tangentielle.

2. Machine électrique suivant la revendication 1, **caractérisée en ce que** le nombre de bobines ( 7 ) est un multiple en nombre entier de deux et **en ce que** les bobines ( 7 ) sont réparties uniformément, considéré tangentiellement à l'axe ( 4 ) de rotation, de manière à ce que les bobines ( 7 ) soient en opposition par paire par rapport à l'axe ( 4 ) de rotation.

3. Machine électrique suivant la revendication 2, **caractérisée en ce que** les bobines ( 7 ) en opposition par paire par rapport à l'axe ( 4 ) de rotation sont montées en parallèle ou en série.

4. Machine électrique suivant l'une des revendications précédentes, **caractérisée en ce que** la machine électrique est constituée en machine électrique bipolaire ou en machine électrique quadripolaire.

5. Machine électrique suivant l'une des revendications précédentes, **caractérisée**
- **en ce que** l'intensité du flux ( B ) magnétique de base dans le stator, du côté éloignée du rotor, varie localement, considéré dans le temps et tangentiellement à l'axe ( 4 ) de rotation, en fonction d'un état de fonctionnement de la machine électrique,
- **en ce que** l'état de fonctionnement de la machine électrique est envoyé à un dispositif ( 15 ) de commande des bobines ( 7 ) et
- **en ce que** le dispositif ( 15 ) de commande commande, en fonction de l'état de fonctionnement de la machine électrique, un dispositif ( 12 ) de commutation influençant l'alimentation des bobines ( 7 ) en le courant ( I' ) de bobine respectif, en ce que les courants ( I' ) de bobine passant dans les bobines ( 7 ) sont modifiés respectivement dans le sens contraire à l'intensité du flux ( B ) magnétique de base dans la partie ( 8 ) du stator ( 2 ), dans laquelle le flux ( B' ) magnétique supplémentaire respectif provoqué par la bobine ( 7 ) respective est orienté radialement-axialement par rapport à l'axe ( 4 ) de rotation.

6. Machine électrique suivant la revendication 5, **caractérisée**
- **en ce que** l'état de fonctionnement de la machine électrique comprend une utilisation de la machine électrique et une orientation du flux ( B ) magnétique de base,
- **en ce que** le dispositif ( 15 ) de commande détermine, en tenant compte à la fois de l'utilisation de la machine électrique et de l'orientation du flux ( B ) magnétique de base, des valeurs ( I" ) admissibles au maximum des courants ( I' ) de bobine et
- **en ce que** le dispositif ( 15 ) de commande commande le dispositif ( 12 ) de commutation, de manière à ce que les courants ( I' ) de bobine passant dans les bobines ( 7 ) ne dépassent à aucun instant la valeur ( I" ) admissible au maximum respectivement.

7. Machine électrique suivant l'une des revendications précédentes, **caractérisée en ce qu'**au moins certaines des bobines ( 7 ) font partie d'au moins un convertisseur courant continu-courant continu.

8. Machine électrique suivant l'une des revendications précédentes, **caractérisée en ce qu'**au moins certaines des bobines ( 7 ) font partie d'un dispositif d'alimentation en courant de la machine électrique.

9. Machine électrique suivant l'une des revendications précédentes, **caractérisée en ce que** la machine électrique est constituée en propulsion principale d'un véhicule ( 19 ) automobile.
